# EUROPEAN PATENT SPECIFICATION

(11) **EP 3 523 541 B1**
(45) Date of publication and mention of the grant of the patent: **28.12.2022**
(21) Application number: 17857897.7
(22) Date of filing: 05.10.2017
(51) Int. Cl.: F15B 11/12, F15B 11/036, F15B 15/16, A01G 23/087, F15B 11/032, F15B 11/20, F15B 15/20

(54) **ENERGY-WOOD GRAPPLE**
ENERGIEHOLZGREIFER
GRAPPIN À BOIS

(30) Priority: 06.10.2016 FI 20165753; 26.10.2016 FI 20165808
(43) Date of publication of application: 14.08.2019
(73) Proprietor: TMK Energiakoura Oy, 41520 Hankasalmi (FI)
(72) Inventor: KOPONEN, Tenho, 41560 Säkinmäki (FI); KOPONEN, Mika, 05400 Jokela (FI)
(74) Representative: Kespat Oy
(86) International application number: PCT/FI2017/050699
(87) International publication number: WO 2018/065670

(56) References cited:
- EP-A1- 0 947 710
- EP-A1- 1 239 166
- WO-A1-2015/136155
- CN-B- 102 400 975
- CN-B- 102 400 975
- DE-A1- 1 426 506
- DE-C1- 3 339 851
- US-A- 3 610 100
- US-A- 4 726 281

## Description

The invention relates to an energy-wood grapple. In addition, the invention also relates to a work machine.

For example, energy-wood grapples are made for excavators, by means of which standing trees can be felled and moved to a desired location after felling. At its simplest, a sharpened counter-blade is added to the wood grapple. When the pincers or similar close, the tree is pressed against the counter-blade, thus being cut at the same time. After cutting, the tree is held by the pincers and can be moved to the desired location. Even several trees at a time can be taken by the energy-wood grapple.

The energy-wood grapples can be used in other work machines too than only the aforesaid excavators. Irrespective of the work machine used, the replacement and flexible operation of the implements are the most important factors when using work machines to make a profit.

Nowadays, excavators are increasing being equipped with a bucket rotator. In clearing carried out using an energy-wood grapple this creates challenges, because the pressure coming to the rotator is reduced to a level of about 220 bar. This reduces the power of an energy grapple attached to the rotator. Increasing the diameter of the cylinder of the energy grapple is a poor solution to this problem as the rotator's feed-through forms a throttle point to a larger oil flow. In the prior art, a cylinder is used in the cutting device, in which there is a 110-mm piston and which requires a pressure of 280 - 300 bar. The lower 220-bar pressure due to the rotator is then insufficient to operate the cylinder.

In most of the cutting cycles carried out by the energy grapple a considerably lower power that the maximum power would be sufficient. When cutting a large tree a larger cylinder is required, the speed of movement of which on the other hand remains relatively low for the aforementioned reasons and slows the operation of the grapple in light work cycles and also causes energy losses. This affects the machine's productivity significantly. The same problems relating to the cylinder's speed of movement and power also exist equally in other fields of industry too and not only in the said energy-wood harvesting given as an example.

A reference concerning the prior art is disclosed in EP-patent application publication number 1 239 166 A1.

The invention is intended to create an energy-wood grapple and a work machine. The characteristic features of the invention are stated in Claims 1 and 12.

By means of the nested cylinder construction of the hydraulic actuator it is possible to perform first a rapid movement using the operating element of the smaller cylinder portion and, for example, only when necessary, to exploit the maximum power produced by the larger cylinder portion. Thus, the hydraulic actuator can be said to be power-variable.

In the energy-wood-grapple, when working with a small tree, only the piston of the inner cylinder portion, which is smaller than the piston of the outer cylinder portion, moves in the hydraulic actuator and working is then brisk. If a larger tree is met, and the power of the hydraulic actuator's inner, i.e. smaller cylinder is no longer sufficient, then the larger piston of the outer cylinder portion comes into play as well. Control of the hydraulic actuator takes place automatically as pressure-criterion control. Thanks to the invention, the power of the hydraulic actuator is sufficient in energy-wood grapple to cut even very large trees, but nevertheless its operation is rapid. Another application of the hydraulic actuator can also be firewood-splitting machines. In these, the operating principle can be similar to that in the energy-wood grapple. Instead of cutting the wood the question is then only of splitting the wood. However, the advantages are mostly the same.

The invention has several different embodiments, particularly in the case of the implementation of the hydraulic actuator. In one embodiment the pressure medium creating the work movement of the smaller, i.e. inner cylinder can be brought to the hydraulic actuator through its piston rod and be led to the chamber delimited by the smaller, i.e. inner cylinder portion's piston and the larger cylinder portion's piston and piston rod. A movement of the smaller cylinder portion is then achieved.

In a second embodiment, the pressure medium creating the work movement of the smaller cylinder can be brought to the hydraulic actuator through the piston of the larger, i.e. outer and the smaller, i.e. inner cylinder portion and led to the chamber delimited by the piston of the smaller, i.e. inner cylinder portion and the piston rod of the larger cylinder portion. Part of the chamber of the smaller cylinder portion can then also be formed inside the piston rod of the inner cylinder portion. By means of this embodiment, a work movement is created in the inner cylinder portion by making the pressure medium act on both sides of the piston of the inner cylinder portion. In addition, in this embodiment all the pressure-medium connections are brought to one end of the hydraulic actuator, which preferably does not move. They, and the pressure-medium hoses connected to them are then protected and in addition the movement strain acting on them is minimal.

By means of the energy-wood grapple according to the invention, it is possible to resolve the challenges brought by, for example, a small oil production and lowered pressure. Other additional advantages achieved by means of the invention are stated in the description portion and the features in the accompanying Claims.

The invention, which is not restricted to the embodiments shown in the following, is described in greater detail with reference to the accompanying figures, in which
- Figures 1 - 5: show schematic examples of the hydraulic actuator as longitudinal cross-sections,
- Figure 6: shows a schematic example of an energy-wood grapple, the cutting device of which is equipped with a hydraulic actuator, and
- Figures 7a and 7b: show some examples of control circuits for the hydraulic actuator.

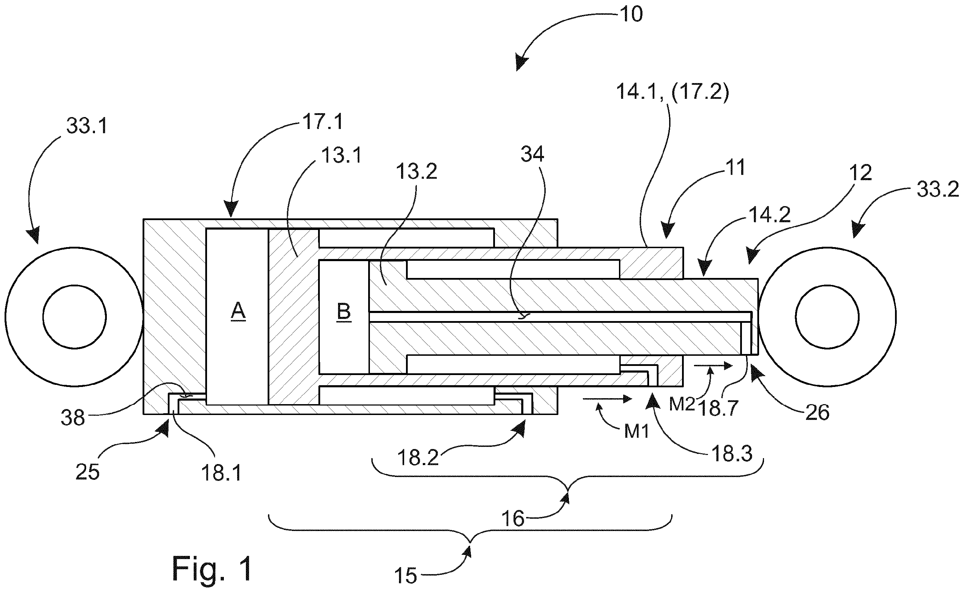

Figures 1 - 5 show schematically some embodiments of the hydraulic actuator 10 belonging to and making possible the arrangement, cross-sectioned in their longitudinal direction, by means of which it is possible, for example, to implement the control principle and operation specific to the invention. Instead of a hydraulic actuator, it is also possible to speak in more everyday language of a hydraulic cylinder. As its basic components, the hydraulic actuator 10 includes two or more cylinder portions 11, 12, chambers A, B, arranged to be formed in the hydraulic actuator 10 for each cylinder portion 11, 12, and a pressure-medium feed arrangement 25, 26 connected to the chambers A, B.

The hydraulic actuator 10 includes two or more cylinder portions 11, 12 arranged inside relative to each other. In the embodiment shown, there are two cylinder portions 11, 12. The cylinder portions 11, 12 can then be said to be coaxially in the actuator and, in addition, also slightly telescopically. The cylinder portions can be called, for example, the outer cylinder portion 11 and the inner cylinder portion 12. The inner cylinder portion 12 is then partly inside the outer cylinder portion 11, i.e. also closer to the centre axis of the actuator. In other words, the outer cylinder portion 11 is then around the inner cylinder portion 12. Thus, the inner cylinder portion 12 is also the smaller of the cylinder portions and the outer cylinder portion 11 is the larger of them. This also applied to the surface areas of their pistons 13.2, 13.1.

Each cylinder portion 11, 12 includes, in an as such known manner, a piston 13.1, 13.2 and a piston rod 14.1, 14.2 connected at one end to the piston 13.1, 13.2. Together the piston 13.1, 13.2 and the piston rod 14.1, 14.2 form the actuator 15, 16. In addition, each cylinder portion 11, 12 also includes, in an as such known manner, a cylindrical part 17.1, 17.2. The operating element 15, 16, or at least its piston 13.1, 13.2 is arranged inside the cylindrical part 17.1, 17.2. The external jacket of the hydraulic actuator 10 now acts as the cylindrical part 17.1 of the outer cylinder portion 11. The hollow piston rod 14.1 of the outer cylinder portion 11 now acts as the cylindrical part 17.2 of the inner cylinder portion 12. The operating element 16 of the inner cylinder portion 12 is sealed against the hollow piston rod 14.1 of the outer cylinder portion 11. The cylinder portions 11, 12 are arranged coaxially relative to each other. Particularly the piston 13.2 of the inner cylinder portion 12 is arranged inside the piston rod 14.1 of the outer cylinder portion 11.

For example, at both ends of the hydraulic actuator 10 there can be attachment lugs 33.1, 33.2 for arranging the actuator in the point of application. The attachment lugs 33.1, 33.2 are now loops. There is then a loop 33.1 at the end of the cylindrical part 17.1 and there is an opposite loop 33.2 at the piston rod 14.2 of the inner cylinder portion 12 at the opposite end of the actuator 10. The hydraulic actuator 10 is typically arranged to its application point in such a way that the cylindrical part 17.1 of the outer cylinder portion 11. i.e. its jacket, is attached to the application point, from a suitable point, such as, for example, precisely from the loop 33.1, and the operating elements 15, 16 move relative to the cylindrical parts 17.1, 17.2. Of course, this can be the other way round, depending on the application. Or also in such a way that both parts of the application point move as a result of the operation of the hydraulic actuator 10, if they, for example, are pivoted to each other.

Chambers A, B are arranged to be formed in the actuator in each cylinder portion 11, 12, at least to create a working movement M1, M2. The chamber A, B is delimited by the actuator's structures, such as, for example, the operating elements 15, 16 and even more particularly the piston 13.1, 13.2, the piston rod 14.1, 14.2, and the internal surfaces of the cylindrical part 17.1, 17.2. The volumes of the chambers A, B can change. The chamber B can also be very small, for example, in a situation in which the pistons 13.1, 13.2 are quite closed onto each other, but it can be said to form, when pressure medium is led between the pistons 13.1, 13.2, which moves at least one operating element 16.

The hydraulic actuator 10 also includes a pressure-medium feed arrangement 25, 26 for creating the work movement M1, M2 of the operating elements 15, 16 by means of a pressure medium led into the chambers A, B. The pressure-medium feed arrangement 25, 26 can include, for example, channels, connections 18.1 - 18.7, valves 39, and control devices, by which, for example, the pressure-medium flow is guided among the various connections and channels, according to a set pressure criterion. The pressure medium is typically, for example, hydraulic oil. The material of the hydraulic actuator 10 can be mainly, for example, metal.

Their own pressure-medium feed arrangement 25, 26 are arranged to the chambers A, B of the cylinder portions 11, 12. Thus its own independent pressure-medium feed is arranged to the chamber B of the inner cylinder portion 12. Thus it is separate from, or able to be arranged to be separate from the pressure-medium feed of the outer cylinder portion 11. Thus each cylinder portion 11, 12 can be operated separately as its own independent unit, or if necessary also together. Due to the nesting of the cylinder portions 11, 12, they have different pressure surface areas. The piston 13.2 of the inner cylinder portion 12 is then smaller and the piston 13.1 of the outer cylinder portion 11 is larger. Thus at the same volume flow the smaller, i.e. inner cylinder portion 12 moves faster than the larger, i.e. outer cylinder portion 11. By means of the independent pressure-medium feed arranged to both cylinder portions 11, 12, and thus the movement of the operating elements 15, 16, an advantage is achieved relating, for example, to the work speed of the hydraulic actuator 10.

In addition, the chambers A, B of the cylinder portions 11, 12 may be without connection, or at least lack a substantial pressure-medium connection between chambers A, B. When the chamber B of the inner cylinder portion 12 and the chamber A of the outer cylinder portion 11 are without connection, the feed of pressure medium to one chamber B will not substantially affect the second chamber A and thus also the cylinder portion 11 arranged for it, but instead operation will be created using that cylinder portion 12, for which most of the medium flow was originally intended.

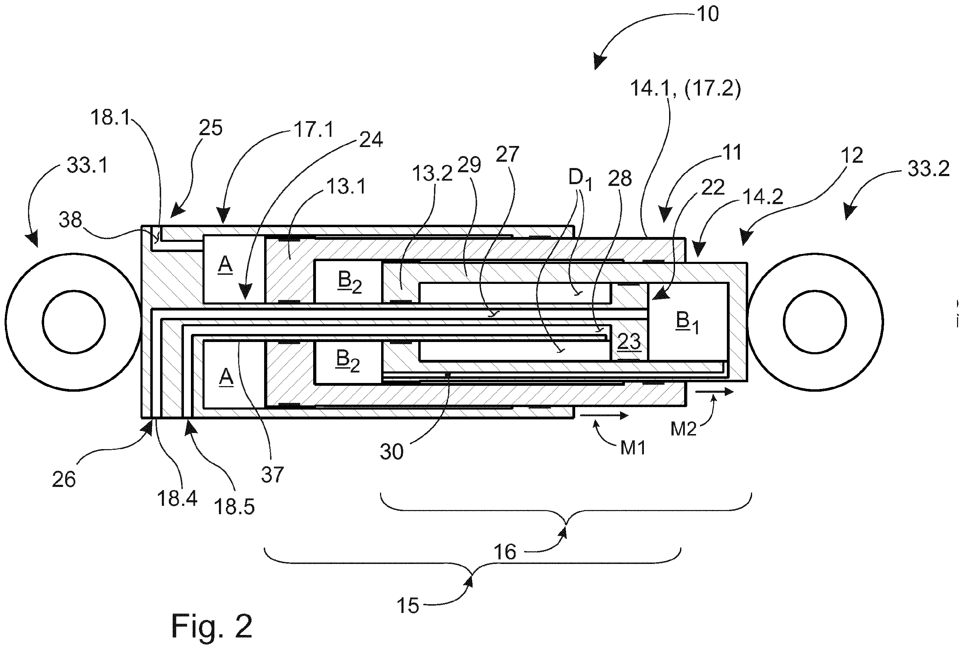

In each embodiment shown in Figures 1 - 5, the pressure-medium feed arrangement 26 of the inner cylinder portion 12, which now includes connections and flow channels, is arranged at least partly inside the piston rod 14.2 of the inner cylinder portion 12. For this purpose there is at least a channel for pressure medium inside the piston rod 14.2. In addition, in the embodiment shown in Figures 2 - 5 the chamber B of the inner cylinder portion 12 is arranged to be formed at least partly inside the hollow piston rod 14.2 of the inner cylinder portion 12.

In the embodiment of Figure 1, chamber B is, in turn, outside the piston rod 14.2 of the inner cylinder portion 12. The chamber B is then arranged to be formed between the piston 13.2 of the inner cylinder portion 12 and the piston 13.1 of the outer cylinder portion 11 and thus inside the cylindrical space delimited by the hollow piston rod 14.1 of the outer cylinder portion 11 inside the hollow piston rod 14.1. Here the pressure-medium feed arrangement 26 to the chamber B of the inner cylinder portion 12 is implemented by means of a channel 34 formed inside the piston rod 14.2 of the inner cylinder portion 12 and running through the piston 13.2, to which there is a connection 18.7 in the piston rod 14.2.

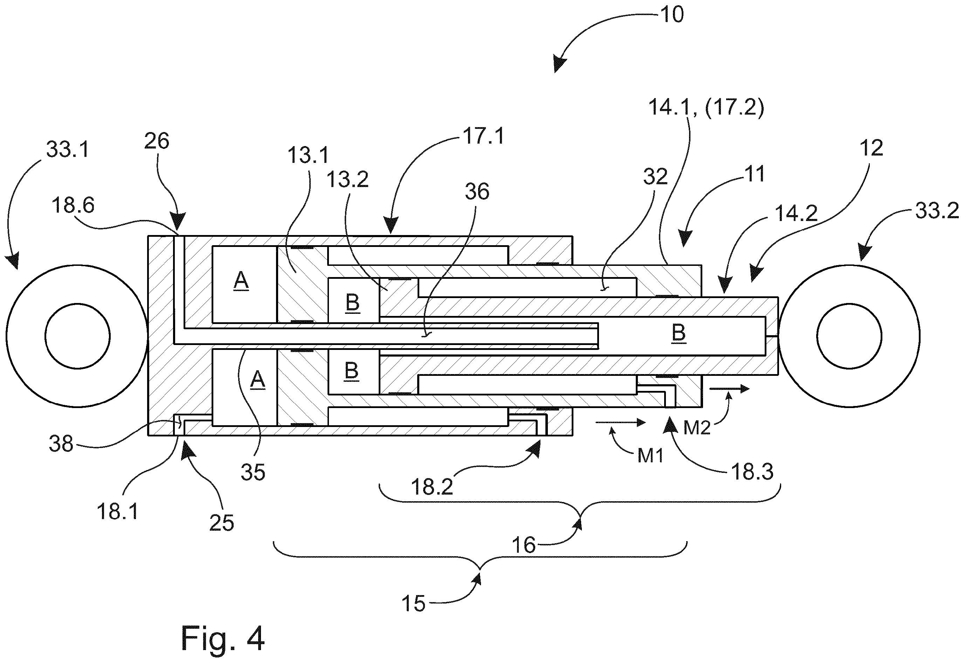

In the embodiment of Figure 4, the chamber B is, in turn, partly inside the hollow piston rod 14.2 of the inner cylinder portion 12 and also outside it between the pistons 13.1, 13.2. Part of the chamber B is then arranged to be formed between the piston 13.2 of the inner cylinder portion 12 and the piston 13.1 of the outer cylinder portion 11 and thus to the cylindrical space delimited by the piston rod 14.1 of the outer cylinder portion 11 inside the hollow piston rod 14.1. In addition, part of the chamber B is arranged to be also formed inside the hollow piston rod 14.2 of the inner cylinder portion 12. Here the pressure-medium feed arrangement 26 to the chamber B of the inner cylinder portion 12 takes place by means of a channel 36 brought through the piston 13.1 of the outer cylinder portion 11 arranged to pipe 35 and connected to connection 18.6, the principle of implementation of which is described in greater detail slightly later in this description, in connection with a second embodiment.

In addition, the chamber B of the inner cylinder portion 12 can be said to be arranged in every embodiment to be formed on the side of the piston rod 14.1 of the outer cylinder portion 11. Further, the chamber B of the inner cylinder portion 12 can be said to then be arranged to form inside the hollow piston rod 14.1 of the outer cylinder portion 11 over at least part of its work stroke. The chamber B can then be limited directly to the hollow piston rod 14.1 of the outer cylinder portion 11 or to be inside the hollow piston rod 14.2 of the inner cylinder portion 12, which for its part is also on the side of the piston rod 14.1 of the outer cylinder portion 11 and also inside it.

Figures 2, 3, and 5 show in turn an embodiment, in which the chamber B of the inner cylinder portion 12 is divided into two sub-chambers B1, B2. The first of these sub-chambers B1 is inside the hollow piston rod 14.2 of the inner cylinder portion 12. The other sub-chamber B2 is in turn on the opposite side of the piston 13.2 relative to the piston rod 14.2 of the inner cylinder portion 12. Thus it is possible to bring a work movement M1 to the inner cylinder portion 12 by means of a pressurized medium brought to both sides of its piston 13.2 and thus ensure its operation in all situations. In other words, more pressure surface area is obtained in this way.

Figures 2, 3, and 5 also show an embodiment, in which the chamber B is divided into two sub-chambers B1, B2 by a divider structure 22. Now the pressure-medium feed arrangement 26 of the inner cylinder portion 12 includes the divider structure 22 arranged into the chamber formed inside the hollow piston rod 14.2 of the inner cylinder portion 12. By means of the divider structure 22, the piston rod 14.2 of the inner cylinder portion 12 is divided into two chamber parts B1, D1. One of the chamber parts B1 is arranged to belong to the chamber B, i.e. to form at least partly the chamber B creating the work movement M2 of the inner cylinder portion 12. By means of the divider structure 22 dividing the hollow piston rod 14.2 into two parts, a simple pressure-medium channel is also created, for example, for the inner cylinder portion 12.

Further, Figures 2, 3, and 5 also show in greater detail one example of the implementation of the divider structure 22. Now the divider structure 22 includes a static divider element 23 and carrier 24 arranged for it. The divider element 23 is inside the hollow piston rod 14.2 of the inner cylinder portion 12. It lies tightly against, for example, the cylindrical internal surface of the piston rod 14.2 and can have seals (not shown) on its outer circumference for this purpose. It is thus a kind of stationary piston, inside the hollow piston rod 14.2 of the inner cylinder portion 12. The inner cylinder portion 12 can then be said to have two pistons; the piston 13.2 at the end of the piston rod 14.2 and the second piston formed by the divider structure 23 inside the piston rod 14.2. The chamber part B1 belonging to the chamber B is then in a space delimited by the divider element 23, inner surface of the piston rod 14.2 and the end of the piston rod 14.2, which end is at the opposite end, relative to its piston 13.2, of the inner cylinder portion 12. Correspondingly, the chamber part D1 is in the space delimited by the divider element 23, the inner surface of the piston rod 14.2 and the piston 13.2, on the opposite side of the divider element 23 relative to chamber part B1. The operating element 16 of the inner cylinder portion 12 and in this case even more particularly the piston rod 14.2 is arranged to move relative to the divider element 23.

The divider structure 22 further also includes a carrier 24 for the divider element 23 led into the hollow piston rod 14.2 of the inner cylinder portion 12 from the side and through of the pistons 13.1, 13.2 of the cylinder portions 11, 12. Now the carrier 24 is formed of an elongated element, an arm 37, which is located on the centre axis of the hydraulic actuator 10 in its longitudinal direction. The carrier 24 can be supported at one end on the end wall of the cylindrical part 17.1 of the hydraulic actuator 10, run through the chamber A of the outer cylinder portion 11 and then through the piston 13.1 of the outer cylinder portion 11, through the sub-chamber B2 of the inner cylinder portion 12 and through the piston 13.2 of the inner cylinder portion 12 into the hollow piston rod 14.2 of the inner cylinder portion 12. There is runs through the chamber part D1 to the divider element 23 to be attached to it. Thus it can used to hold the divider element 23 in place inside the hollow piston rod 14.2 of the inner cylinder portion 12. In the pistons 13.1, 13.2 there are openings and seals for the feed-through of the arm 37. This then permits the movement of the pistons 13.1, 13.2 around the stationary arm 37. The pipe 35 of the embodiment of Figure 4 can be implemented using the same operating principle.

The pressure-medium feed arrangement 26 to the chamber B of the inner cylinder portion 12 can be implemented using a carrier 24 and led through the divider element 23. The carrier 24 then is formed of a hollow pipe rod, which forms the arm 37. Inside it can be, for example, channels 27, 28 arranged coaxially to each other for pressure medium in order to move the operating element 16 of the inner cylinder portion 12 at least in the work direction M2 or alternatively even in both directions, precisely as happens in the embodiments of Figures 2, 3, and 5. The channels 27, 28 include an inner channel 27 attached to a connection 18.4 arranged to the arm 37 and arranged to run through the divider element 23 in order to led pressure medium to the chamber B and now even more particularly B1 and thus to create the work movement M2 of the inner cylinder portion 12. In addition, the channels also include an outer channel 28 arranged to the arm 37 attached to a connection 18.5 arranged to led pressure medium to the opposite side of the divider element 23 relative to the chamber B1, i.e. now to chamber D1. This creates in the inner cylinder portion 12 a return movement, i.e. a movement in the opposite direction relative to the work movement M2.

Figures 2, 3, and 5 also show an embodiment, in which channelling 30 is arranged in the jacket 29 of the hollow pipe formed by the piston rod 14.2 of the inner cylinder portion 12 and in addition also to the piston 13.2, in order to lead pressure medium from the first sub-chamber B1 also to the second sub-chamber B2, in order to create a work movement M2 in the inner cylinder portion 12. This offers a simple way to take the pressure medium also outside the operating element 16, when a moving force can be directed to it also from the other side of the piston 13.2 relative to the chamber part B1 and thus ensure the movement of the operating element 16 without extra structures for leading the medium. The use of the hollow jacket 29 of the piston rod 14.2 to take the pressure medium simplifies the implementation of the interior of the hydraulic actuator 10.

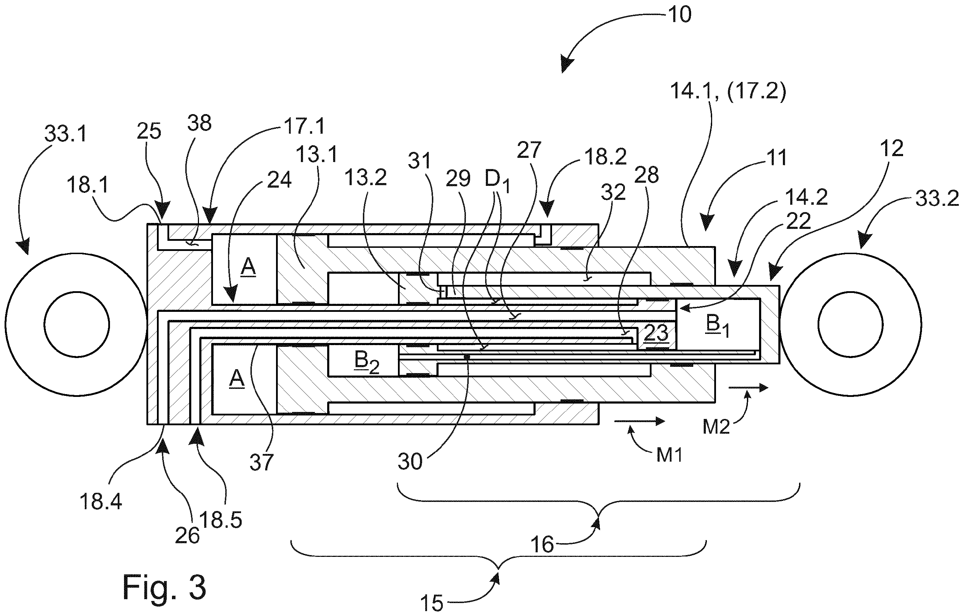

Figure 3 shows an embodiment, in which channelling 31 is arranged in the piston rod 14.2 of the inner cylinder portion 12 in order to lead pressure medium to the space 32 between the piston rod 14.2 of the inner cylinder portion 12 and the piston rod 14.1 of the outer cylinder portion 11, to achieve a minus movement of the operating elements 15, 16. Thus, in this embodiment, by means of a channel 28 arranged to the carrier 24 the pressure medium led to chamber part D1 is then led through channel 31 to the chamber 32. In this way the return of the inner and outer cylinder portions 11, 12 after a work movement can be ensured. In other words, in this way more pressure surface area is also obtained for the return.

The pressure-medium feed arrangements 25, 26 can include connections and also the aforesaid channels connecting to the connections for leading the pressure medium to the desired chamber. The work movement M1 of the outer cylinder portion 11 is created by pressure medium led to the first chamber A delimited by the outer cylindrical portion 17.1 i.e. to the opposite side of the piston 13.1 relative to the piston rod 14.1 of the outer cylinder portion 11. Here, the connection 18.1 and the channel 38 connected to it are used, more generally the first means for leading pressure medium to chamber A to be formed for the outer cylinder portion 11. In the case of the invention, the hydraulic actuator 10 includes, in addition, also second means for leading pressure medium to the second chamber B isolated from the chamber A to be formed for the outer cylinder portion 11, in order to move the operating element 16 of the inner cylinder portion 12 independently relative to the operating element 15 of the outer cylinder portion 11. The second chamber B to be formed for the inner cylinder portion 12 is arranged for at least part of the stroke inside the piston rod 14.1 of the outer cylinder portion 11. At the same time that second chamber B is, relative to the first chamber A, on the opposite side of the piston 13.1 of the outer cylinder portion 11.

As was already seen from the embodiments of Figures 1 - 5, the hydraulic actuator 10 can be double-acting. In the embodiments of Figures 1 and 3, the return movement of the outer cylinder portion 11 is created in addition also by means of pressure medium led to connections 18.2, 18.3, which acts on the piston 13.1 of the outer cylinder portion 11 from its piston-rod 14.1 side. In Figure 1, the return movement of the inner cylinder portion 12 is created in addition by means of pressure medium led to connection 18.3, which acts on the piston 13.2 of the inner cylinder portion 12 from its piston-rod 14.2 side. In the embodiments of Figures 1 and 4, the connection 18.3 is in the piston rod 14.1 of the outer cylinder portion 11.

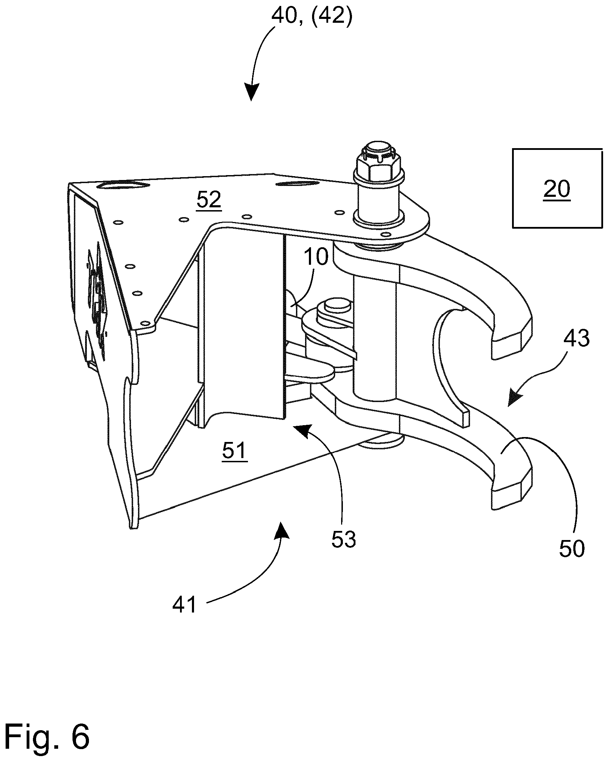

Figure 6 shows one embodiment of the arrangement for controlling the operation of a hydraulic actuator 10 in a working device 42, a part of which the hydraulic actuator 10 now is. The arrangement includes one or more hydraulic actuators 10 arranged to operate a moving work element 43 belonging to the working device 42. In addition, the arrangement also includes control means 20 for controlling the operation of the hydraulic actuator 10. The hydraulic actuator 10 includes two or more cylinder portions 11, 12, namely an inner cylinder portion 12 and an outer cylinder portion 11, arranged inside relative to each other. Each cylinder portion 11, 12 includes a piston 13.1, 13.2 and a piston rod 14.1, 14.2 arranged to form an operating element 15, 16. In addition, each cylinder portion 11, 12 includes a cylindrical part 17.1, 17.2, inside which the operating element 15, 16 is arranged. The piston 13.2 of the inner cylinder portion 12 is arranged inside the piston rod 14.1 of the outer cylinder portion 11. In addition, the piston rods 14.1, 14.2 of the operating elements 15, 16 are arranged to protrude partly outside the actuator 10. Thus, the piston rods 14.1, 14.2 protrude from an opening arranged in the end of the cylindrical part 17.1, i.e. from the external jacket of the hydraulic actuator 10, thus extending outside the hydraulic actuator 10.

In addition, the hydraulic actuator 10 also includes chambers A, B arranged to be formed in each cylinder portion 11, 12, and a pressure-medium feed arrangement 25, 26 for creating a work movement M1, M2 of the operating element 15, 16, by means of a pressure medium led to the chambers A, B. Control means 20 are arranged, in order to control the operation of the hydraulic actuator 10.

In one or more hydraulic actuators 10 belonging to the arrangement, their own pressure-medium feed arrangements 25, 26 are arranged to the chambers A, B of the cylinder portions 11, 12, as described above. Examples of these are shown in Figures 1 - 5. The control means 20 are arranged to control the pressure-medium feed arrangement 25, 26 in order to create a work movement M2, M1 in stages, first by means of the inner cylinder portion 12, particularly its operating element 16, and then, after a set pressure criterion is met, by means of the outer cylinder portion 11, particularly its operating element 15. For this purpose the control means 20 include a pressure-controlled valve 45. The arrangement, and thus also the hydraulic actuator 10 belonging to it, is particularly advantageous, for example, in applications with a lower pressure and lower volume flow, such as, for example, when operating an energy-wood grapple, for example, with a rotator, i.e. a rotation device.

Figure 6 shows one example of an energy-wood grapple 40, in which the hydraulic actuator 10 is utilized and which now acts as an example of the working device 42 according to the invention. Thus, according to the invention, the working device 42 is precisely an energy-wood grapple 40. The energy-wood grapple 40 includes a frame 52, a cutting device 41 arranged to the frame 52 for cutting a tree, and a hydraulic actuator 10 arranged to operate the cutting device 41, to which a moving work element 43, in the form of pincers 50 belongs.

The energy-wood grapple 40 includes the arrangement to which the hydraulic actuator 10 is arranged as part of it. The hydraulic actuator is one of the hydraulic actuators 10 described above. With reference to Figures 1 - 5, it includes two or more cylinder portions 11, 12 arranged inside each other, namely an inner cylinder portion 12 and an outer cylinder portion 11, each of which cylinder portions 11, 12 include a piston 13.1, 13.2 and a piston rod 14.1, 14.2, arranged to form an operating element 15, 16, and a cylindrical part 17.1, 17.2, inside which the operating element 15, 16 is arranged. The piston 13.2 of the inner cylinder portion 12 is arranged inside the piston rod 14.1 of the outer cylinder portion 11. The piston rods 14.1, 14.2 of the operating elements 15, 16 are arranged to partly protrude outside the actuator 10. Thus, they both then extend outside the actuator 10. In addition, the hydraulic actuator 10 includes chambers A, B arranged to be formed in each cylinder portions 11, 12. Further, the hydraulic actuator 10 includes a pressure-medium feed arrangement 25, 26 for creating a work movement M1, M2 in the operating element 15, 16, by means of a pressure medium led to the chambers A, B. In addition, the energy-wood grapple 40 includes control means 20 for controlling the operation of the hydraulic actuator 10.

In the hydraulic actuator 10, their own pressure-medium feed arrangements 25, 26 are arranged to the chambers A, B of the cylinder portions 11, 12. The control means 20 are arranged to control the pressure-medium feed arrangements 25, 26 to create a work movement M2, M1 in stages, first by means of the inner cylinder portion 12 and then, when the set pressure criterion is met, by means of the outer cylinder portion 11. The criterion can be, for example, a pressure criterion, for which a limit value is set. When it is exceeded, the feed of pressure medium takes place to the outer cylinder portion 11 and thus, for example, more power is obtained for cutting due to the larger size of the outer cylinder portion 11, when this is needed. A pressure-controlled valve 45 is controlled using the pressure criterion.

The cutting device 41 can be, for example, the operational totality formed of pincers 50 and a cutting blade 51, shown in the figure. The hydraulic actuator 10 is then arranged to act on the pincers 50, which act as the work element 43. Thus, the hydraulic actuator 10 is arranged to move the work element 43 in the form of the pincers 50. Not according to the invention, the cutting device 41 can also be based, for example, on guillotine cutting. Its blade then moves and the hydraulic actuator 10 acts on the blade. In the energy-wood grapple 40 there can also be stripping means, such as, for example, a stripping blade (not shown).

In the embodiment of Figure 6 the question is of a single-hold grapple, in which the tree is pressed against the blade 51 by a single pincer 50. The pincer 50 delimits a throat 53 with the frame 52. The tree is pressed against the slant blade 51 at the same time being cut. The energy-wood grapple 40 is attached, for example to the boom of an excavator, by the narrow end of the frame 52. In between can be a rotator for the energy-wood grapple 40.

The single-hold pincer 50 can be operated using a single hydraulic actuator 10 belonging to the arrangement, which is situated inside a casing-like frame 52. The hydraulic actuator 10 is then attached to, for example, the frame 52 of the energy-wood grapple 40 by the loop 33.1 arranged in the end of the cylindrical part 17.1. At the opposite end, the hydraulic actuator 10 is secured by a loop 33.2 in the end of the piston rod 14.2 of the inner cylindrical component 12 to a lug arranged to the pincer 50. Thus, the actuator 10 is well protected. At the same time, a short, but large cylinder can be used. By means of the hydraulic actuator 10 disclosed in the application, the movement of the pincer 50 is made rapid and at the same time effective for cutting even a thick tree.

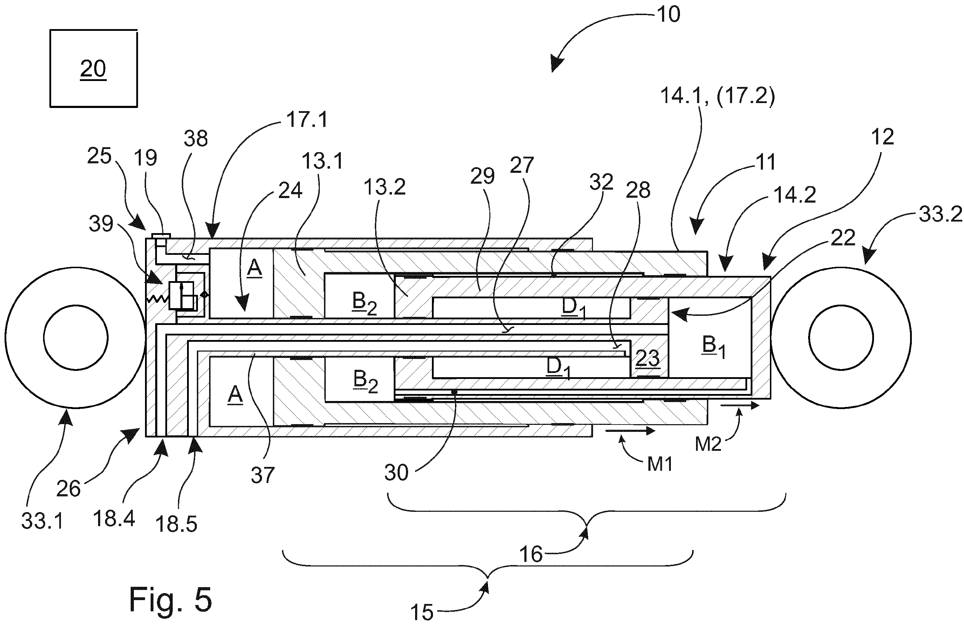

The following is a description of the operation of the energy-wood grapple 40 and also of the hydraulic actuator 10 fitted to that shown, for example, in Figures 1 - 5. When the pincers 50 are open, the operating elements 15, 16 of the actuator 10 are mostly inside the cylindrical parts 17.1, 17.2 so that the actuator 10 is at its shortest length. Their pistons 13.1, 13.2 can then touch each other at the end of the cylindrical part 17.1 with the loop 33.1. Once the energy-wood grapple 40 has been taken next to the tree, the pincer 50 is closed. The pressure medium is then led from the connections 18.4, 18.6, and 18.7 of the actuator 10 and through the channel 27, 34, 36 connected to it to the chamber B, (B1 and B2) of the inner cylinder portion 12. As a result, the operating element 16 of the inner cylinder portion 12 starts to push outwards, i.e. to create its movement M2. Then, for example, the pressure-controlled sequence valve 39, shown in Figure 5 prevents the entry of the pressure-medium flow to channel 38 now closed from its connection with a plug 19 and thus also to chamber A of the outer cylinder portion 11. Other ways to control the pressure-medium feeds are, of course, also possible. Thus the inner small piston 13.2 starts moving first, because the sequence valve 39 between the directional control valve and the actuator 10 guides the flow to it initially. The sequence valve 39 can also be replaced with a counterbalance valve (load control valve, overcentre valve). Generally it is possible to speak of pressure-controlled valves 45. If the sequence or counterbalance valve is integrated in the hydraulic actuator 10, one connection and the related medium hoses can be eliminated.

If the tree is cut with only the work movement M2 of the inner cylinder portion 12, the work movement M1 of the outer cylinder portion 11 will not be needed at all. Cutting achieved using only the inner cylinder portion 12 is, per event, relatively quick compared, for example, to the tree being cut using a traditional telescopic cylinder of the prior art, in which the work movement is started using the outer, i.e. larger cylinder part, and the inner smaller cylindrical part engage only when the outer and larger cylindrical part has reached its greatest length.

If, however, the tree is not cut using only the work movement M2 of the inner small-diameter cylinder portion, then its movement either slows or stops entirely. As a result, the pressure rises in the line leading pressure medium to chamber B of the first cylinder portion 12, more generally in the pressure circuit. Then, for example, the pressure-controlled sequence valve 39, shown in Figure 5, opens and the pressure medium can flow from channel 27 also to channel 38, which leads to chamber A of the outer cylinder portion 11. In the embodiments of the other figures, for example, the external control means 20 lead the pressure-medium flow to the connection 18.1 and through channel 38 attached to it to chamber A of the outer cylinder portion 11. This creates a movement M1 for the operating element 15 of the outer cylinder portion 11. In the chamber B of the inner cylinder portion 12, the pressure medium previously led to it either remains or leaves it, depending on the implementation. The piston 13.1 of the operating element 15 of the outer cylinder portion 11 then either pushes the piston 13.1 of the inner cylinder portion 12 through the pressure medium of the chamber B or reaches the piston 13.2 and thus in turn also moves the operating element 16 of the inner cylinder portion, the end of which is pivoted to the pincer 50. Thus, with the aid of the outer larger diameter cylinder portion 11 a greater force is created, with which the tree is sure to be cut, is the smaller cylinder portion 12 is not yet able to do so. In other words, if the load resisting the movement of the smaller piston 13.2 becomes too great for it, the pressure rises as a result of the load in the hydraulic line and the sequence valve 39 opens the flow route for the hydraulic pressure medium to the larger piston 13.1.

The entire available stroke and/or power of the hydraulic actuator 10 may not necessarily be needed during cutting. This can be taken into account in the installation of the hydraulic actuator 10 in the energy-wood grapple 40. In addition, for example the strokes of the operating elements 15, 16 of the cylinder portions 11, 12 can be limited. If, for example, the maximum power is not needed over the whole area of movement, then the movement of the piston 13.1 of the outer, i.e. larger cylinder portion can be limited to be shorter. The actuator 10 can then be built in such a way that its maximum length is not, like that of telescopic cylinders, the sum of the movement of the cylinder portions 11, 12, instead the actuator 10 stops, when either of the cylinder portions 11, 12 reaches its full stroke.

Referring to the above, in the embodiments of Figures 2, 3, and 5 the extreme length of the hydraulic actuator 10 can also be limited. Here, the arm 37 forming the carrier 24 of the divider structure 22 and the divider element 23 arranged to its end can be exploited to limit the extreme length of the hydraulic actuator 10 to the desired length. This can be defined by the length of the arm 37 and thus the location of the divider element 23 inside the piston rod 14.2 of the inner cylinder portion 12. When the piston 13.2 reaches the divider element 23 inside the piston rod 14.2, the movement of the inner cylinder portion stops. The maximum power produced by the outer, i.e. larger cylinder portion 11 is available only over the length of its structural stroke. With a longer movement than that, the cylinder then no longer produces such a great power (unless the emptying of the inner, i.e. smaller cylinder 12 is prevented). In addition, the embodiments of Figures 2, 3, and 5 are preferred also because in them all the connections are in the cylindrical part 17.1 of the hydraulic actuator 10, which is generally subject to only a small movement, if any at all. The hoses connected to them are then subject to little movement stress and in addition they are protected inside, for example, the frame 52 of the application device.

Correspondingly, the opening of the pincer 50 is achieved by means of a return, i.e. minus movement in the hydraulic actuator. The pressure medium is then led out of the chambers B and A and correspondingly from the connections 18.2, 18.3, and 18.5 the pressure medium is led further along the channels to the chambers connected to them. It is then possible to affect both operating elements 15, 16, by which it is ensured that pincer is sure to open, even though the cut tree may have, for example, wedged into the cutting device 41.

The invention further relates to a work machine, which includes a set of booms, a rotation device, i.e. rotator arranged to the end of the set of booms, and an energy-wood grapple 40 according to the invention arranged to the rotator.

In the applicant's pilot-stage tests using the energy-wood grapple it has been observed that in energy-wood harvesting it is possible to cut up to 80% of the trees on a certain type of work site (for example, the ditch edges around fields) using the inner, i.e. smaller and thus faster cylinder portion 12. In the grapple according to the example, the smaller cylinder portion 12 can by itself cut a tree of about 10 cm. The invention then accelerates harvesting operations substantially and thus its productivity increases.

Owing to the arrangement and hydraulic actuator 10, using the inner, i.e. smaller cylinder portion 12 and even more particularly its operating element 16 even greater speed of movement can be obtained, if the loading is less and only when necessary the larger surface area, i.e. the outer and thus larger cylinder portion 11 and even more particularly its operating element 15 by which greater power is obtained, is used. Thus the actuator 10 can be said to have variable power. Instead of cylinder portions the term telescopic components can be used.

One versed in the art will understand that in the case of the control means 20 (set of valves) there exist several other ways to implement the movements of the cylinder portions 11, 12 and the operations they achieve, which include, for example, the operation in stages of the cylinder portions 11, 12. According to Figure 5, the sequence or counterbalance valve can be internal, i.e. integrated in the actuator 10 or in connection with it, or also external. When a sequence or counterbalance valve is being used, the control means 20 can include only a conventional directional control valve. For example, using a sequence or counterbalance valve, automatic operation of the cylinder portions 11, 12 can be achieved. One possible way is also to apply one or more pressure transmitters somewhere in the circuit, and on/off valves. This can also be termed electrical valve control. In addition, one versed in the art will understand that when pressure medium is led to one chamber, then pressure medium is removed from its counter-chamber. In addition, the pressure surface areas of the pistons 13.1, 13.2 can be arranged in such a way that an optimal relation of power to speed of movement is achieved in each application. As an example, the diameters of the pistons 13.1, 13.2 can be 130 mm and 80 mm.

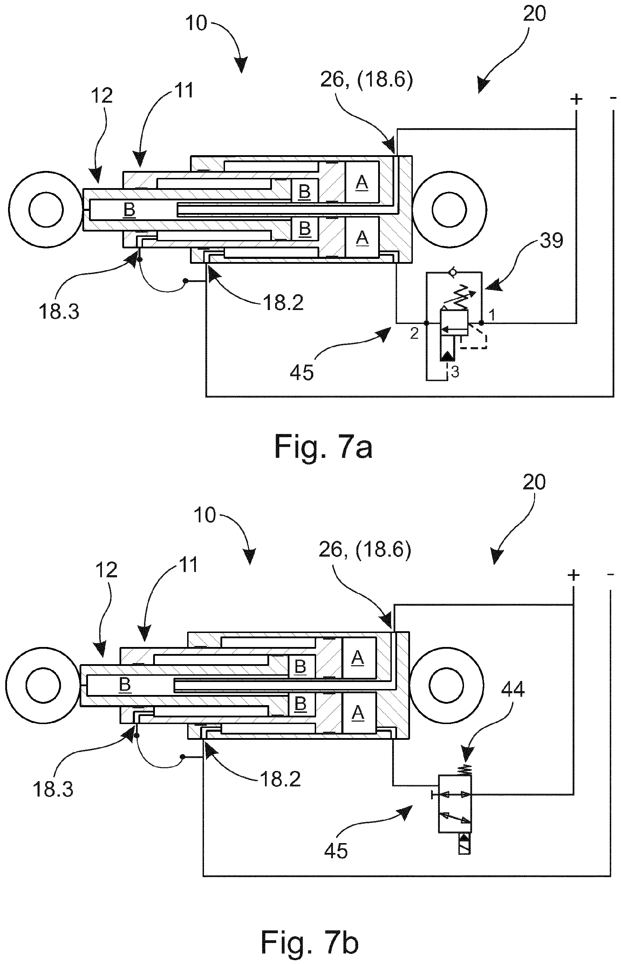

Figures 7a and 7b show schematically some examples of possible control circuits of the hydraulic actuator 10. Figure 7a shows the principle of one pressure control implemented using a sequence valve 39 and Figure 7b control taking place using an electric valve 44, in which a pressure criterion can also be applied. In addition, the pipelines of the control circuits and their connections 18.2, 18.3, 18.6 to the hydraulic actuator 10 are also shown here.

In a wood-chopping machine, which is presented as a second example of the working device not according to the invention, the actuator 10 is applied in an analogous manner to that in the energy-wood grapple. The actuator 10 is then used to affect the wood to be split, for example, by pushing it against a splitting blade belonging to the wood-chopping machine. There can be a thrust plate between the wood and the actuator, which thus now acts as the working element. Before the splitting of the wood in the wood-chopping machine there can also be a cutting device. The power and speed advantages achieved by means of the actuator 10 in splitting wood correspond fully to those in the energy-wood grapple presented as an example according to the invention.

In the hydraulic actuator 10 belonging to the arrangement there is thus a second smaller cylinder inside the larger cylinder. There are then also two pistons 13.1, 13.2 inside each other in the actuator 10. Then, when the working movement starts the pressure is guided, for example, through a sequence or counterbalance valve to the smaller of these cylinders, which is also the inner of the cylinders. The pressure prevailing in the cylinder rises as the load resisting movement increases. As the pressure rises to the set limit value the sequence or counterbalance valve opens a flow route to the larger, i.e. the outer cylinder, which takes the work movement to its end. In the piston of the larger cylinder the hydraulic pressure acts of a larger area and the power of the cylinder increases in proportion to the surface area. The opening of the flow route to the larger cylinder side, carried out by the sequence or counterbalance valve, can be set to the highest possible pressure, so that the large side is not operated unnecessarily. The return movement is rapid, because the oil spaces of the inwardly directed movement are relatively small.

## Claims

1. An energy-wood grapple which includes
- a frame (52),
- a cutting device (41) arranged to the frame (52) for cutting a tree, which includes a pincer or pincers (50) arranged to be movable,
- one or more hydraulic actuators (10) arranged to move the pincer or pincers (50),
wherein each of the one or more hydraulic actuators (10) includes
- two or more cylinder portions (11, 12) arranged inside relative to each other, thereby forming an inner cylinder portion (12) and an outer cylinder portion (11), each of which cylinder portions (11, 12) includes a piston (13.1, 13.2) and a piston rod (14.1, 14.2) arranged to form an operating element (15, 16), and a cylindrical part (17.1, 17.2), inside which the operating element (15, 16) is arranged, and the piston (13.2) of which inner cylinder portion (12) is arranged inside the piston rod (14.1) of the outer cylinder portion (11), and which piston rods (14.1, 14.2) of the operating elements (15, 16) are arranged to protrude partly outside the corresponding cylindrical parts (17.1, 17.2),
- chambers (A, B) arranged to be formed in each cylinder portion (11, 12), the chambers being arranged with their own pressure-medium feed arrangement (25, 26) to arrange a feed of a pressurized medium to the chambers (A, B) to create the work movement (M1, M2) of the operating elements (15, 16) by means of the pressurized medium led to the chambers (A, B) of the cylinder portions, the energy-wood grapple (40) further comprising
- control means (20) for controlling the operation of the one or more hydraulic actuator (10), which are arranged to control the feed of the pressurized medium to the chambers (A, B) through the pressure-medium feed arrangement (25, 26) in order to create the work movement (M2, M1) in stages,
wherein the control means (20) include a pressure criterion-controlled valve (45), the control means (20) being arranged to operate each cylinder portion (11, 12) separately as its own independent unit by controlling the feed of the pressurized medium to the chambers (A, B) through their own separate pressure-medium feed arrangements (25, 26) in order to create the work movement (M2, M1) in stages, first using the pressurized medium arranged to be fed to the chamber (B) of the inner cylinder portion (12) and then, when the set pressure criterion has been met, using the pressurized medium arranged tc be fed to the chamber (A) of the outer cylinder portion (11).

2. The energy-wood grapple according to Claim 1, **characterized in that** the pressure-medium feed arrangement (26) of the inner cylinder portion (12) is arranged inside the piston rod (14.2) of the inner cylinder portion (12).

3. The energy-wood grapple according to Claim 1 or 2, **characterized in that** the chamber (B) of the inner cylinder portion (12) is arranged to be formed at least partly inside the piston rod (14.2) of the inner cylinder portion (12).

4. The energy-wood grapple according to any of Claims 1 - 3, **characterized in that** the chamber (B) of the inner cylinder portion (12) is divided into two sub-chambers (B1, B2), of which the first sub-chamber (B1) is inside the piston rod (14.2) of the inner cylinder portion (12) and the second sub-chamber (B2) is on the opposite side of the piston (13.2) relative to the piston rod (14.2) of the inner cylinder portion (12).

5. The energy-wood grapple according to any of Claims 3 - 4,
**characterized in that** the pressure-medium feed arrangement (26) of the inner cylinder portion (12) includes a divider structure (22) arranged to the chamber formed inside the piston rod (14.2) of the inner cylinder portion (12) in order to divide the piston rod (14.2) of the inner cylinder portion (12) into two chamber parts (B1, D1), of which one is arranged to belong to the chamber (B) of the inner cylinder portion (12).

6. The energy-wood grapple according to Claim 5, **characterized in that** the divider structure (22) includes
- a divider element (23), relative to which the operating element (16) of the inner cylinder portion (12) is arranged to move,
- a carrier (24) for the divider element (23), led inside the piston rod (14.2) of the inner cylinder portion (12), through the pistons (13.1, 13.2) of the cylinder portions (11, 12),
- channels (27, 28) arranged coaxially to the carrier (24) for the pressure medium in order to move the operating element (16) of the inner cylinder portion (12), which channels (27, 28) include an inner channel (27) arranged through the divider element (23) for leading pressure medium to the chamber (B) and an outer channel (28) arranged to lead pressure medium to the opposite side of the divider element (23) relative to the chamber (B).

7. The energy-wood grapple according to any of Claims 4 -6, with Claims 5 - 6 referring back to Claim 4, **characterized in that** a channelling (30) is arranged in the jacket (29) of the piston rod (14.2) and piston (13.2) of the inner cylinder portion (12) in order to lead pressure medium to the second sub-chamber (B2).

8. The energy-wood grapple according to any of Claims 1 - 7, **characterized in that** a channelling (31) is arranged in the piston (13.2) and/or the piston rod (14.2) of the inner cylinder portion (12) in order to lead pressure medium into the space (32) between the piston rod (14.2) of the inner cylinder portion (12) and the piston rod (14.1) of the outer cylinder portion (11) to achieve a minus movement for the operating elements (15, 16).

9. The energy-wood grapple according to Claim 1 or 2, **characterized in that**
- the chamber (B) of the inner cylinder portion (12) is arranged to be formed between the piston (13.2) of the inner cylinder portion (12) and the piston (13.1) of the outer cylinder portion (11),
- the pressure-medium feed arrangement (26) to the chamber (B) of the inner cylinder portion (12) is arranged through the piston rod (14.2) and piston (13.2) of the inner cylinder portion (12).

10. The energy-wood grapple according to any of Claims 5 - 8 with Claims 7 - 8 referring back to Claims 5 or 6, **characterized in that** the extreme length of the hydraulic actuator (10) is arranged to be set by the divider structure (22).

11. The energy-wood grapple according to any of Claims 1 - 10, **characterized in that** the pressure criterion-controlled valve (45) is a counterbalance valve or a sequence valve (39).

12. A work machine, which includes
- a set of booms,
- a rotating device arranged to the end of the set of booms,
- an energy-wood grapple (40) arranged to the rotating device,
**characterized in that** the energy-wood grapple (40) is according to any of Claims 1 - 11.

## Patentansprüche

1. Energieholzgreifer, der Folgendes einschließt:
- einen Rahmen (52),
- eine am Rahmen (52) angeordnete Schneidvorrichtung (41) zum Schneiden eines Baumes, die eine Zange oder Zangen (50) einschließt, die beweglich angeordnet sind,
- einen oder mehrere hydraulische Stellantriebe (10), die zum Bewegen der Zange oder Zangen (50) angeordnet sind,
wobei jeder von dem einen oder den mehreren Stellantrieben (10) Folgendes einschließt:
- zwei oder mehr Zylinderabschnitte (11, 12), die innen relativ zueinander angeordnet sind, wodurch ein innerer Zylinderabschnitt (12) und ein äußerer Zylinderabschnitt (11) gebildet werden, wobei jeder der Zylinderabschnitte (11, 12) einen Kolben (13.1, 13.2) und eine Kolbenstange (14.1, 14.2) einschließt, die angeordnet sind, um ein Betätigungselement (15, 16) und einen zylindrischen Teil (17.1, 17. 2) zu bilden, innerhalb dessen das Betätigungselement (15, 16) angeordnet ist, und wobei der Kolben (13.2) des inneren Zylinderabschnitts (12) innerhalb der Kolbenstange (14.1) des äußeren Zylinderabschnitts (11) angeordnet ist, und wobei die Kolbenstangen (14.1, 14.2) der Betätigungselemente (15, 16) so angeordnet sind, dass sie teilweise außerhalb der entsprechenden zylindrischen Teile (17.1, 17.2) vorstehen,
- Kammern (A, B), die so angeordnet sind, dass sie in jedem Zylinderabschnitt (11, 12) gebildet werden, wobei die Kammern mit ihrer eigenen Druckmediumzufuhranordnung (25, 26) angeordnet sind, um eine Zufuhr eines mit Druck beaufschlagten Mediums zu den Kammern (A, B) zu veranlassen, um die Arbeitsbewegung (M1, M2) der Betätigungselemente (15, 16) mittels des zu den Kammern (A, B) der Zylinderabschnitte geleiteten Druckmediums zu erzeugen,
Energieholzgreifer (40) ferner umfassend
- Steuermittel (20) zur Steuerung des Betriebs des einen oder der mehreren hydraulischen Stellantriebe (10), die angeordnet sind, um die Zufuhr des Druckmediums zu den Kammern (A, B) durch die Druckmediumzufuhranordnung (25, 26) zu steuern, um die Arbeitsbewegung (M2, M1) in Stufen zu erzeugen,
wobei die Steuermittel (20) ein durch ein Druckkriterium gesteuertes Ventil (45) einschließen, wobei die Steuermittel (20) so angeordnet sind, dass sie jeden Zylinderabschnitt (11, 12) separat als eine eigene unabhängige Einheit betreiben, indem sie die Zufuhr des mit Druck beaufschlagten Mediums zu den Kammern (A, B) durch deren eigene separate Druckmediumzufuhranordnungen (25, 26) steuern, um die Arbeitsbewegung (M2, M1) in Stufen zu erzeugen, wobei zuerst das mit Druck beaufschlagte Medium verwendet wird, das angeordnet ist, um der Kammer (B) des inneren Zylinderabschnitts (12) zugeführt zu werden, und dann, wenn das eingestellte Druckkriterium erfüllt worden ist, das mit Druck beaufschlagte Medium verwendet wird, das angeordnet ist, um der Kammer (A) des äußeren Zylinderabschnitts (11) zugeführt zu werden.

2. Energieholzgreifer nach Anspruch 1, **dadurch gekennzeichnet, dass** die Druckmittelzufuhranordnung (26) des inneren Zylinderabschnitts (12) innerhalb der Kolbenstange (14.2) des inneren Zylinderabschnitts (12) angeordnet ist.

3. Energieholzgreifer nach Anspruch 1 oder 2, **dadurch gekennzeichnet, dass** die Kammer (B) des inneren Zylinderabschnitts (12) so angeordnet ist, dass sie zumindest teilweise innerhalb der Kolbenstange (14.2) des inneren Zylinderabschnitts (12) ausgebildet ist.

4. Energieholzgreifer nach einem der Ansprüche 1 - 3, **dadurch gekennzeichnet, dass** die Kammer (B) des inneren Zylinderabschnitts (12) in zwei Unterkammern (B1, B2) unterteilt ist, von denen sich die erste Unterkammer (B1) innerhalb der Kolbenstange (14.2) des inneren Zylinderabschnitts (12) befindet und die zweite Unterkammer (B2) sich auf der gegenüberliegenden Seite des Kolbens (13.2) relativ zu der Kolbenstange (14.2) des inneren Zylinderabschnitts (12) befindet.

5. Energieholzgreifer nach einem der Ansprüche 3 - 4, **dadurch gekennzeichnet, dass** die Druckmittelzufuhranordnung (26) des inneren Zylinderabschnitts (12) eine Teilerstruktur (22) einschließt, die an der innerhalb der Kolbenstange (14.2) des inneren Zylinderabschnitts (12) gebildeten Kammer angeordnet ist, um die Kolbenstange (14.2) des inneren Zylinderabschnitts (12) in zwei Kammerteile (B1, D1) zu unterteilen, von denen einer so angeordnet ist, dass er zu der Kammer (B) des inneren Zylinderabschnitts (12) gehört.

6. Energieholzgreifer nach Anspruch 5, **dadurch gekennzeichnet, dass** die Teilerstruktur (22) Folgendes einschließt:
- ein Teilerelement (23), relativ zu dem das Betätigungselement (16) des inneren Zylinderabschnitts (12) beweglich angeordnet ist,
- einen Träger (24) für das Teilerelement (23), der innerhalb der Kolbenstange (14.2) des inneren Zylinderabschnitts (12) durch die Kolben (13.1, 13.2) der Zylinderabschnitte (11, 12) geführt wird,
- Kanäle (27, 28), die koaxial zum Träger (24) für das Druckmedium angeordnet sind, um das Betätigungselement (16) des inneren Zylinderabschnitts (12) zu bewegen, wobei die Kanäle (27, 28) einen inneren Kanal (27), der durch das Teilerelement (23) hindurch angeordnet ist, um Druckmedium zur Kammer (B) zu leiten, und einen äußeren Kanal (28) einschließen, der angeordnet ist, um Druckmedium zur gegenüberliegenden Seite des Teilerelements (23) relativ zur Kammer (B) zu leiten.

7. Energieholzgreifer nach einem der Ansprüche 4 - 6, wobei sich die Ansprüche 5 - 6 auf Anspruch 4 beziehen,
**dadurch gekennzeichnet, dass** im Mantel (29) der Kolbenstange (14.2) und des Kolbens (13.2) des inneren Zylinderabschnitts (12) eine Kanalisierung (30) angeordnet ist, um Druckmedium in die zweite Teilkammer (B2) zu leiten.

8. Energieholzgreifer nach einem der Ansprüche 1 - 7, **dadurch gekennzeichnet, dass** in dem Kolben (13.2) und/oder der Kolbenstange (14.2) des inneren Zylinderabschnitts (12) eine Kanalisierung (31) angeordnet ist, um Druckmittel in den Raum (32) zwischen der Kolbenstange (14.2) des inneren Zylinderabschnitts (12) und der Kolbenstange (14.1) des äußeren Zylinderabschnitts (11) zu leiten, um eine gegenläufige Bewegung für die Betätigungselemente (15, 16) zu erreichen.

9. Energieholzgreifer nach Anspruch 1 oder 2, **dadurch gekennzeichnet, dass**
- die Kammer (B) des inneren Zylinderabschnitts (12) so angeordnet ist, dass sie zwischen dem Kolben (13.2) des inneren Zylinderabschnitts (12) und dem Kolben (13.1) des äußeren Zylinderabschnitts (11) gebildet wird,
- die Druckmittelzufuhranordnung (26) zur Kammer (B) des inneren Zylinderabschnitts (12) durch die Kolbenstange (14.2) und den Kolben (13.2) des inneren Zylinderabschnitts (12) angeordnet ist.

10. Energieholzgreifer nach einem der Ansprüche 5 - 8, wobei sich die Ansprüche 7 - 8 auf Anspruch 5 oder 6 beziehen, **dadurch gekennzeichnet, dass** die äußerste Länge des hydraulischen Stellantriebs (10) so angeordnet ist, dass sie durch die Teilerstruktur (22) eingestellt wird.

11. Energieholzgreifer nach einem der Ansprüche 1 - 10, **dadurch gekennzeichnet, dass** das durch ein Druckkriterium gesteuerte Ventil (45) ein Ausgleichsventil oder ein Zuschaltventil (39) ist.

12. Arbeitsmaschine, die Folgendes einschließt:
- einen Satz von Auslegern,
- eine Drehvorrichtung, die am Ende des Satzes von Auslegern angeordnet ist,
- einen Energieholzgreifer (40), der an der Drehvorrichtung angeordnet ist,
**dadurch gekennzeichnet, dass** der Energieholzgreifer (40) nach jedem der Ansprüche 1 - 11 gebildet ist.

## Revendications

1. Grappin à bois à usage énergétique comprenant
- un châssis (52),
- un dispositif de coupe (41) fixé au châssis (52) pour couper un arbre, qui comprend une pince ou des pinces (50) mobiles,
- un ou plusieurs vérins hydrauliques (10) permettant de faire bouger la pince ou les pinces (50),
dans lequel le vérin hydraulique ou chacun des vérins hydrauliques (10) comprend
- au moins deux portions de cylindre (11, 12) disposées à l'intérieur l'une de l'autre pour former une portion de cylindre intérieure (12) et une portion de cylindre extérieure (11), chacune desdites portions de cylindre (11, 12) comprenant un piston (13.1, 13.2) et une tige de piston (14.1, 14.2) pour former un élément de commande (15, 16), et une partie cylindrique (17.1, 17.2), dans laquelle l'élément de commande (15, 16) est disposé, et le piston (13.2) de ladite portion de cylindre intérieure (12) est disposé à l'intérieur de la tige de piston (14.1) de la portion de cylindre extérieure (11), et lesdites tiges de piston (14.1, 14.2) des éléments de commande (15, 16) sont disposés de façon à dépasser partiellement des parties cylindriques correspondantes (17.1, 17.2),
- des chambres (A, B) formées dans chaque portion de cylindre (11, 12), les chambres ayant leur propre système d'alimentation en fluide de pression (25, 26) formant un circuit de fluide de pression dans les chambres (A, B) afin de créer le mouvement de travail (M1, M2) des éléments de commande (15, 16) au moyen du fluide de pression injecté dans les chambres (A, B) des portions de cylindre,
le grappin à bois à usage énergétique (40) comprenant également
- des moyens de contrôle (20) pour contrôler le fonctionnement du ou des vérins hydrauliques (10), lesquels sont conçus pour contrôler l'injection du fluide de pression dans les chambres (A, B) par l'intermédiaire du système d'alimentation en fluide de pression (25, 26) afin de créer le mouvement de travail (M2, M1) par étapes,
dans lequel les moyens de contrôle (20) comprennent une vanne contrôlée selon un critère de pression (45), les moyens de contrôle (20) étant conçus pour faire fonctionner chaque portion de cylindre (11, 12) séparément en tant qu'unité indépendante propre en contrôlant le flux de fluide de pression dans les chambres (A, B) par l'intermédiaire de leurs propres systèmes d'alimentation en fluide de pression distincts (25, 26) afin de créer le mouvement de travail (M2, M1) par étapes, en utilisant d'abord le fluide sous pression prévu pour être injecté dans la chambre (B) de la portion de cylindre intérieure (12) puis, lorsque le critère de pression défini est rempli,
en utilisant le fluide sous pression prévu pour être injecté dans la chambre (A) de la portion de cylindre extérieure (11).

2. Grappin à bois à usage énergétique conformément à la revendication 1, **caractérisé en ce que** le système d'alimentation en fluide de pression (26) de la portion de cylindre intérieure (12) se trouve dans la tige de piston (14.2) de la portion de cylindre intérieure (12).

3. Grappin à bois à usage énergétique conformément à la revendication 1 ou 2, **caractérisé en ce que** la chambre (B) de la portion de cylindre intérieure (12) est formée au moins partiellement à l'intérieur de la tige de piston (14.2) de la portion de cylindre intérieure (12).

4. Grappin à bois à usage énergétique conformément à l'une quelconque des revendications 1 à 3, **caractérisé en ce que** la chambre (B) de la portion de cylindre intérieure (12) est divisée en deux chambres secondaires (B1, B2), la première chambre secondaire (B1) se trouvant à l'intérieur de la tige de piston (14.2) de la portion de cylindre intérieure (12) et la deuxième chambre secondaire (B2) se trouvant de l'autre côté du piston (13.2) par rapport à la tige de piston (14.2) de la portion de cylindre intérieure (12).

5. Grappin à bois à usage énergétique conformément à l'une quelconque des revendications 3 à 4, **caractérisé en ce que** le système d'alimentation en fluide de pression (26) de la portion de cylindre intérieure (12) comprend une structure de séparation (22) disposée dans la chambre formée à l'intérieur de la tige de piston (14.2) de la portion de cylindre intérieure (12) afin de diviser la tige de piston (14.2) de la portion de cylindre intérieure (12) en deux parties de chambre (B1, D1), dont l'une appartient à la chambre (B) de la portion de cylindre intérieure (12).

6. Grappin à bois à usage énergétique conformément à la revendication 5, **caractérisé en ce que** la structure de division (22) comprend
- un élément diviseur (23), par rapport auquel l'élément de commande (16) de la portion de cylindre intérieure (12) bouge,
- un transporteur (24) pour l'élément diviseur (23), guidé à l'intérieur de la tige de piston (14.2) de la portion de cylindre intérieure (12), par l'intermédiaire des pistons (13.1, 13.2) des portions de cylindre (11, 12),
- des canaux (27, 28) fixés de manière coaxiale au transporteur (24) pour que le fluide de pression déplace l'élément de commande (16) de la portion de cylindre intérieure (12), lesdits canaux (27, 28) comprenant un canal intérieur (27) disposé à travers l'élément diviseur (23) pour guider le fluide de pression dans la chambre (B) et un canal extérieur (28) disposé pour guider le fluide de pression de l'autre côté de l'élément diviseur (23) par rapport à la chambre (B).

7. Grappin à bois à usage énergétique conformément à l'une quelconque des revendications 4 à 6, les revendications 5 à 6 faisant référence à la revendication 4,
**caractérisé en ce qu'**un circuit (30) se trouve dans la chemise (29) de la tige de piston (14.2) et le piston (13.2) de la portion de cylindre intérieure (12) afin de guider le fluide de pression dans la deuxième chambre secondaire (B2).

8. Grappin à bois à usage énergétique conformément à l'une quelconque des revendications 1 à 7, **caractérisé en ce qu'**un circuit (31) est disposé dans le piston (13.2) et/ou la tige de piston (14.2) de la portion de cylindre intérieure (12) afin de guider le fluide de pression dans l'espace (32) situé entre la tige de piston (14.2) de la portion de cylindre intérieure (12) et la tige de piston (14.1) de la portion de cylindre extérieure (11) afin que les éléments de commande (15, 16) effectuent un mouvement négatif.

9. Grappin à bois à usage énergétique conformément à la revendication 1 ou 2, **caractérisé en ce que**
- la chambre (B) de la portion de cylindre intérieure (12) est formée entre le piston (13.2) de la portion de cylindre intérieure (12) et le piston (13.1) de la portion de cylindre extérieure (11),
- le système d'alimentation en fluide de pression (26) relié à la chambre (B) de la portion de cylindre intérieure (12) est disposé à travers la tige de piston (14.2) et le piston (13.2) de la portion de cylindre intérieure (12).

10. Grappin à bois à usage énergétique conformément à l'une quelconque des revendications 5 à 8, les revendications 7 et 8 faisant référence aux revendications 5 ou 6, **caractérisé en ce que** la longueur extrême du vérin hydraulique (10) est déterminée par la structure de division (22).

11. Grappin à bois à usage énergétique conformément à l'une quelconque des revendications 1 à 10, **caractérisé en ce que** la vanne contrôlée selon un critère de pression (45) est une vanne de contre-pression ou une vanne de séquence (39).

12. Machine de travail, qui comprend
- un ensemble de flèches,
- un dispositif pivotant fixé à l'extrémité de l'ensemble de flèches,
- un grappin à bois à usage énergétique (40) fixé au dispositif pivotant,
**caractérisé en ce que** le grappin à bois à usage énergétique (40) est conforme à l'une quelconque des revendications 1 à 11.
